# EUROPÄISCHE PATENTSCHRIFT

(11) **EP 0 940 696 B1**
(45) Veröffentlichungstag und Bekanntmachung des Hinweises auf die Patenterteilung: **29.08.2007**
(21) Anmeldenummer: 98121105.5
(22) Anmeldetag: 09.11.1998
(51) Int. Cl.: G02B 6/00, G02B 6/50, E01F 11/00

(54) **Einlegungsvorrichtung zum Einlegen eines langgestreckten Schutzprofils oberhalb eines in einer Verlegenut verlegten Kabels**
Device for installing a protection profile at the upper side of a cable in a groove
Dispositif d'installation d'un profil de protection au dessus d'un cable dans une rainure

(30) Priorität: 03.03.1998 DE 19808945
(43) Veröffentlichungstag der Anmeldung: 08.09.1999
(73) Patentinhaber: CCS Technology, Inc., Wilmington, DE 19803 (US)
(72) Erfinder: Finzel, Lothar, 85617 Unterschleissheim (DE); Mayr, Ernst, 82319 Starnberg (DE); Müller, Thomas, 96515 Sonneberg (DE); Diermeier, Heinz, 81739 München (DE)
(74) Vertreter: Epping - Hermann - Fischer

(56) Entgegenhaltungen:
- WO-A-97/20236
- US-A- 3 570 379

## Beschreibung

Die Erfindung betrifft eine Einlegevorrichtung zum Einlegen eines langgestreckten Schutzprofils oberhalb eines in einer Verlegenut verlegten Kabels.

Aus WO 97/20236 ist ein Verfahren zum Einbringen eines optischen Kabels in einen festen Verlegegrund bekannt, wobei das zu verlegende Kabel in eine gefräste Verlegenut eingebracht wird. Oberhalb des Kabels wird dort ein langgestreckter Niederhalter eingesetzt, der U-förmig ausgebildet ist und dessen Schenkel sich seitlich gegen die Nutwandungen abstützen. Das Einlegen des auch als Schutz dienenden Niederhalters erfolgt mehr oder weniger durch manuelle Betätigung.

Weiterhin ist in WO 97/20236 eine Verlegeeinheit gezeigt, bei der von einer ersten Trommel ein Mikrokabel abgespult wird, so dass sich das Mikrokabel leicht in eine Verlegenut einlegen lässt. Auf einer zweiten Trommel ist ein Profilkörper angebracht, der durch eine Andruckrolle in die Verlegenut oberhalb des Mikrokabels fortlaufend eingepresst wird. Dadurch wird in einem Verlegevorgang das Mikrokabel in die Verlegenut eingelegt und durch den Profilkörper fixiert.

US 3 570 379 A betrifft eine Vorrichtung zur Verlegung eines Dichtungsstreifens zwischen verschiedenen Sektionen eines Straßenbelags. Hierbei ist der Dichtungsstreifen auf einer Ablauftrommel angeordnet und wird über eine Führungsrolle und eine Eindrückrolle in einen abzudichtenden Spalt des Straßenbelags eingeführt.

Aufgabe vorliegender Erfindung ist eine Einlegevorrichtung für langgestreckte Schutzprofile zu schaffen, mit deren Hilfe in einfacher Weise das Einpressen in die Verlegenut erfolgen kann. Weiterhin ist Aufgabe, ein geeignetes Schutzprofil für diese Einlegevorrichtung zu gestalten. Die gestellte Aufgabe wird mit einer Einlegevorrichtung der eingangs genannten Art gemäß den Merkmalen des Patentanspruchs 1, sowie durch ein langgestrecktes Schutzprofil gemäß Patentanspruch 23 gelöst. Weiterbildungen und verschiedene Ausgestaltungen der Erfindung sind Gegenstand der Unteransprüche.

Beim Einlegen des Schutzprofiles mit Hilfe einer Einlegevorrichtung gemäß der Erfindung ergeben sich Vorteile besonders dadurch, daß das Schutzprofil gleichmäßig und kontinuierlich eingeführt wird, wobei besonders hierfür geeignete Profilformen, zum Beispiel eine U-Form mit flexiblen Schenkeln, verwendet werden. Die Schutzprofile sind außerdem so gestaltet, daß sie auf einer Ablauftrommel gewickelt geliefert und in der Einlegevorrichtung eingesetzt werden können. Die verwendete Ablauftrommel ist mit einer Bremse versehen, so daß das Abziehen von der Ablauftrommel geregelt werden kann. Beim Einpressen des Schutzprofiles mittels einer Eindrückrolle wird gewährleistet, daß das Schutzprofil richtig positioniert und fixiert wird, wobei die seitlichen Ränder des Schutzprofils so umgebogen werden, daß sie sich gegen die Wandungen der Verlegenut spreizen. Dadurch ist gewährleistet, daß sich das Schutzprofil nicht mehr selbständig aus der Verlegenut bewegen kann. Vor oder während des Einlegens des Schutzprofils erfolgt die Auffüllung mit entsprechend geeigneten Füllmitteln, zum Beispiel mit flexiblen Füllmassen oder Quellmitteln wie Quellfäden, Quellvließe oder Quellfüllmassen. Dadurch ist ein Schutz vor eindringendem Wasser gegeben. Für diese Verlegeart werden vorzugsweise sogenannte Mikrokabel verwendet, die aus einem Rohr bestehen, in das Lichtwellenleiter lose eingebracht sind. Das Schutzprofil kann sowohl aus Metall als auch aus Kunststoff bestehen und dient gleichzeitig auch als mechanischer Schutz gegen äußere Einwirkungen.

Als Schutzprofil wird vorzugsweise glasfaser- oder aramidgarn-verstärkter Kunststoff verwendet, der vorzugsweise mit High-Density-Polyethylen (HDPE) umspritzt ist. Ein derartiges Schutzprofil ist in großer Länge herstellbar und kann in einfacher Weise aufgetrommelt werden. Wenn ein Schutzprofil aus Metall oder aus Kunststoff mit langgestreckten Einlagen aus Metalldrähten verwendet wird, kann es auch als Erdungsband oder als elektrischer Leiter ausgenützt werden. Weiterhin können in dem Schutzprofil aus Kunststoff längsverlaufend Kupferadern oder Lichtwellenleiter eingebracht werden, die sich zum Beispiel auch für die Überwachung der Kabelstrecke eignen. Mit einem derartigen Schutzprofil gemäß der Erfindung ergeben sich nun folgende Vorteile:
- Das in die Verlegenut eingelegte Kabel wird fixiert, wobei der Restraum der Verlegenut vorzugsweise mit bituminösem Sand aufgefüllt wird.
- Das Kabel wird gegen mechanische Einwirkungen geschützt.
- Das Kabel wird beim Auffüllen der Verlegenut mit heißem Bitumen vor Wärmeeinwirkung geschützt.
- Im Reparaturfall läßt sich die Verlegenut durch Herausziehen des Schutzprofils leicht öffnen, ohne daß das Kabel beansprucht wird.
- Bei zusätzlichen Einlagen von Drähten in das Schutzprofil können entsprechende Übertragungen erfolgen.

Bei einem Mikrokabel mit einem Rohr aus Metall und entsprechender Außenisolierung kann ein Schutzprofil aus Metall oder aus Kunststoff mit eingelegten Drähten als Rückleiter dienen.

Über eingelagerte Drähte im Schutzprofil kann auch eine Stromversorgung erfolgen.

Das Schutzprofil kann auch an einem Mikrokabel direkt angebracht werden, so daß eine einzige Einlegeeinheit gebildet ist.

Als Profilformen eignen sich in erster Linie Formen, die sich nach dem Eindrücken in die Verlegenut gegen die Wandungen der Verlegenut verspreizen, so daß sofort eine Fixierung erfolgt.

Die Einlegevorrichtung gemäß der Erfindung kann als selbstfahrende Einheit gestaltet werden oder auch in Kabelwagen oder in einem Wagen, der das Füllmittel enthält, installiert werden. Als Füllmittel für die Verlegenut eignet sich besonderes bituminöser Sand.

Zweckmäßigerweise enthält die Einlegevorrichtung auch Vorrichtungen zum Einbringen von Quellmitteln und/oder Füllmitteln, so daß mehrere Vorgänge in einem Ablauf, jedoch nacheinander erfolgen können.

Außerdem istdie Ablauftrommel jeweils so gestaltet, daß sie zum Aufwickeln der einzelnen Schutzprofilvarianten geeignet ist.

Die Erfindung wird nun anhand von elf Figuren näher erläutert.
- Figur 1: zeigt die Einlegevorrichtung.
- Figur 2: zeigt eine Verlegenut mit eingeführtem Kabel und darüber angeordnetem Schutzprofil.
- Figur 3: zeigt ein Schutzprofil.
- Figur 4: zeigt ein Schutzprofil mit eingelegten Längseinheiten.
- Figur 5: zeigt ein Schutzprofil mit einem angehängten ovalen Maxibündel.
- Figur 6: zeigt ein Schutzprofil mit angehängtem Lichtwellenleiterbündel.
- Figur 7: zeigt ein Schutzprofil mit einem angehängten Mikrokabel.
- Figur 8: zeigt ein mehrschichtiges Schutzprofil.
- Figur 9: zeigt ein Schutzprofil mit abstehenden Rändern.
- Figur 10: zeigt ein weiteres Schutzprofil mit abstehenden Rändern.
- Figur 11: zeigt eine aufgefüllte Verlegenut.

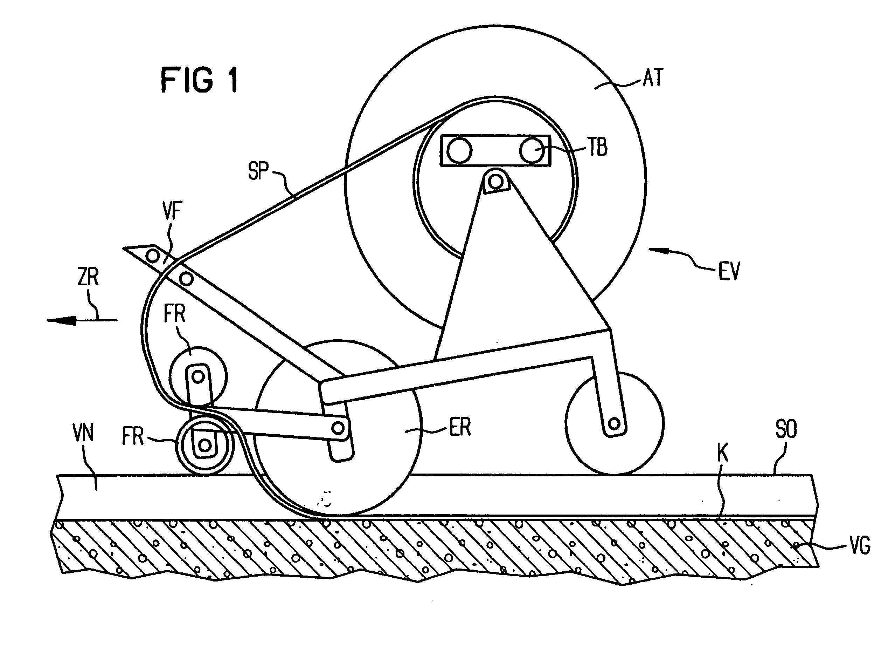

Figur 1 zeigt eine Einlegevorrichtung gemäß der Erfindung. Sie besteht aus einem fahrbaren Gestell, auf dem ein Kabelbock zum Aufnehmen einer Ablauftrommel AT angeordnet ist. Auf dieser Ablauftrommel AT ist das in der Verlegenut VN einzubringende Schutzprofil SP aufgewickelt, das während des Einlegevorganges abgezogen wird. Dabei wird dieses Schutzprofil SP über eine Vorführung VF zu zwei Führungsrollen FR geführt, zwischen denen das Schutzprofil SP zur Verlegenut VN entsprechend positioniert hindurchläuft. Anschließend wird das Schutzprofil SP durch eine Eindrückrolle ER in die Verlegenut VN eingedrückt und durch die sich abbiegenden Ränder durch Anspreizen an die Wandungen der Verlegenut innerhalb dieser Verlegenut und oberhalb des bereits verlegten Kabels K fixiert. Während dieses Vorganges wird die Einlegevorrichtung EV auf der Straßenoberfläche SO in der angegebenen Zugrichtung ZR über der Verlegenut VN entlanggezogen bzw. -gefahren.

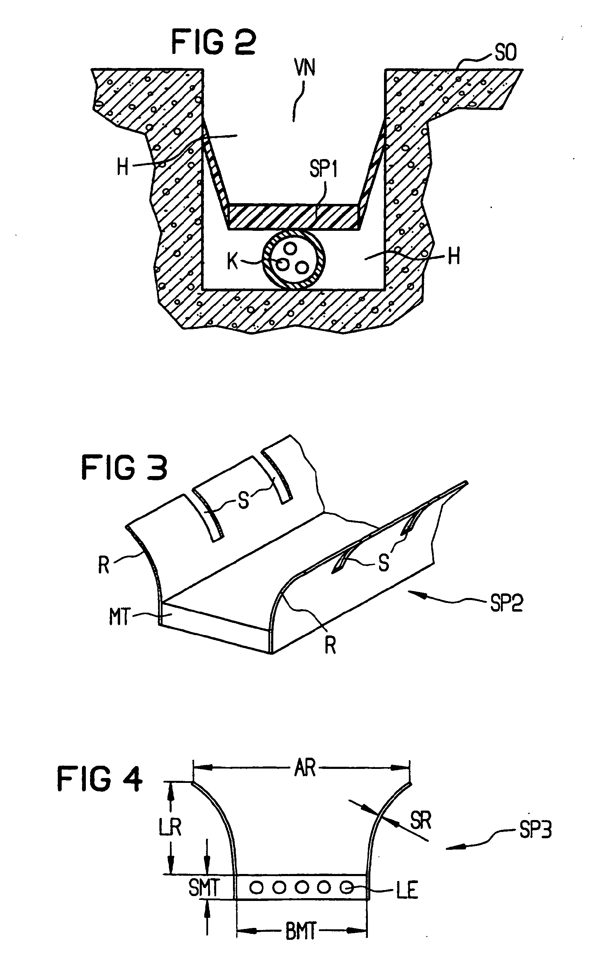

Figur 2 zeigt den Querschnitt einer in die Straßenoberfläche SO eingebrachten Verlegenut VN, in die ein Kabel, zum Beispiel ein Mikrokabel, bestehend aus einem Rohr und lose eingebrachten Lichtwellenleitern, verlegt ist, wobei oberhalb bereits ein Schutzprofil SP1 mit gespreizten Rändern fixiert ist. Die verbleibenden Hohlräume H werden mit einem entsprechenden Füllmittel aufgefüllt.

Figur 3 zeigt ein Schutzprofil SP2, das aus einem das Kabel schützenden Mittelteil MT und seitlichen Rändern R besteht, wobei die Ränder R flexibel sind, so daß auch das Aufwickeln auf eine Ablauftrommel möglich ist. Die Ränder sind deshalb zum Beispeil auch mit Schlitzen S versehen, so daß die Flexibilität der gesamten Anordnung zum Aufwickeln verbessert wird.

Figur 4 zeigt ein Schutzprofil SP3 mit eingelagerten Längselementen LE, die zur Verstärkung und bei geeigneter Ausbildung auch als Strom- bzw. Übertragungsleiter dienen. Für ein Ausführungsbeispiel, das bei einer Verlegenut von 10 mm Breite verwendet wird, sind vorzugsweise folgende Maße vorgesehen. Die Breite BMT des Mittelteils beträgt 8 bis 9 mm, die Stärke SMT des Mittelteils MT beträgt ca. 3 mm, die Länge LR der flexiblen Ränder R beträgt 7 mm und die Stärke SR eines flexiblen Randes R beträgt 0,5 bis 1 mm. Der weite offene Abstand AR der Ränder R beträgt dabei vorzugsweise 15 mm bei einem U-förmigen Querschnitt.

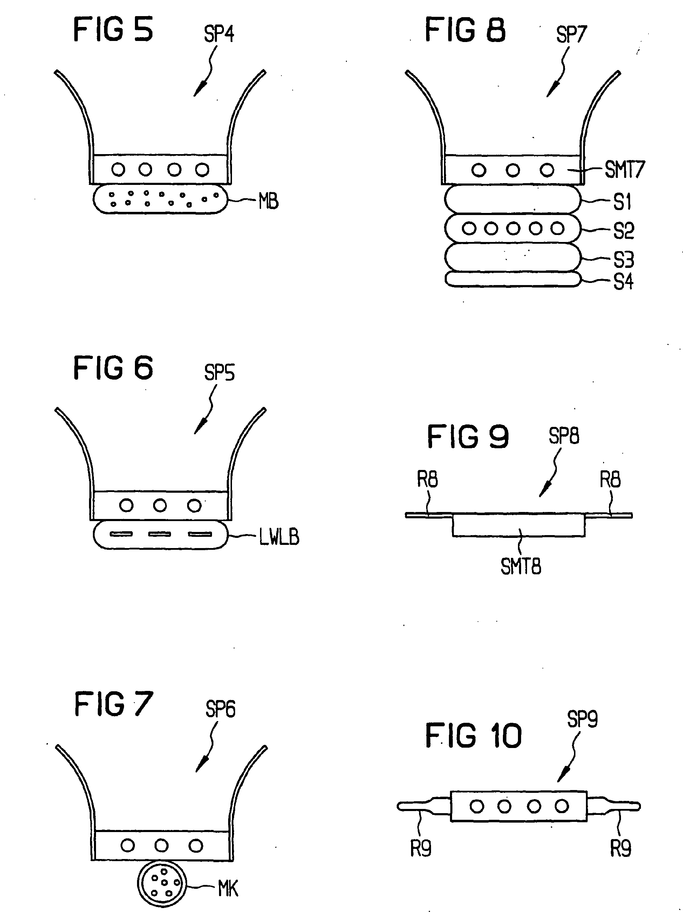

Figur 5 zeigt ein Schutzprofil SP4, bei dem bereits ein ovales Lichtwellenleiter-Maxibündel MB an seinem Mittelteil befestigt ist.

Figur 6 zeigt ein Schutzprofil SP5 mit einem angespritzten Lichtwellenleiter-Bändchen, wobei dieses vorzugsweise so angespritzt ist, daß es leicht vom Schutzprofil SP5 abtrennbar ist.

Figur 7 zeigt ein Schutzprofil SP5 mit einem am Mittelteil befestigten Lichtwellenleiter-Mikrokabel MK.

Figur 8 zeigt ein Schutzprofil SP6, das aus mehreren Schichten besteht, wobei das Mittelteil SMT7 als Schutzschicht mit eingelegten Längselementen ausgebildet ist. Die Schicht S1 dient als Dämpfungsschicht und besteht aus physikalisch verzelltem Polyurethan (PU) mit kugelig ausgebildeten Hohlräumen, die das Eindringen von Wasser in Längsrichtung vermeiden. Die Schicht S2 enthält beispielsweise Drähte oder Lichtwellenleiter für Übertragungszwecke und die Schicht S3 ist wiederum als Schutzschicht ausgebildet. Die Schicht S4 ist aus Polyethylen(PE). Sie bewirkt bei Verwendung von Glasfasern in Schicht S2, daß sich das Mikrokabel M6 oder ein anderes sich darunter besfindliches Material nicht durchdrückt.

Figur 9 zeigt ein besonders gut wickelbares Schutzprofil SP8, bei dem die flexiblen Ränder R8 in Form von lamellenartigen, flexiblen Bändern ohne Abstufung in einer Ebene vom Mittelteil SMT8 abstehen.

Figur 10 zeigt ein Schutzprofil SP9 mit beidseitig mittig vom Mittelteil ausgehenden flexiblen Rändern R9, wobei hier wiederum als Beispiel ein Schutzprofil mit Längselementen gewählt ist.

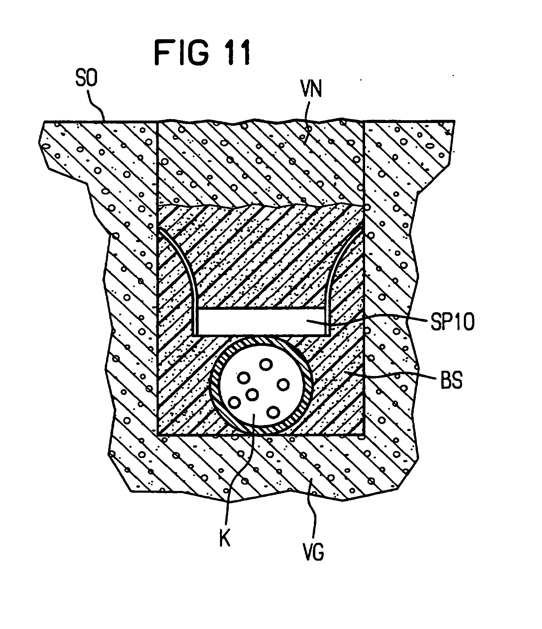

Figur 11 zeigt eine fertig bestückte Verlegenut VN, die in einer Straßenoberfläche SO eines Verlegegrundes VG eingebracht worden ist. Im Grunde der Verlegenut VN ist das verlegte Kabel K zu erkennen, über dem ein Schutzprofil SP10 angeordnet ist, das sich mit seinen Rändern gegen die Wandungen der Verlegenut VN verspreizt. Die restlichen Hohlräume der Verlegenut VN sind mit einem Füllmittel, zum Beispiel mit bituminösem Sand BS aufgefüllt. Es können jedoch auch zusätzliche Füllmittel eingebracht werden, die bei Eindringen von Wasser aufquellende Wirkung zeigen und somit ein weiteres Eindringen von Wasser verhindern.

## Patentansprüche

1. Einlegevorrichtung zum Einlegen eines langgestreckten Schutzprofils oberhalb eines in einer Verlegenut verlegten Kabels,
mit einer Ablauftrommel (AT), die auf der Einlegevorrichtung (EV) angeordnet ist, die fahrbar ausgestaltet ist,
mit einer in die Verlegenut (VN) eingreifenden Eindrückrolle (ER), wobei
auf der Ablauftrommel (AT) ein langgestrecktes Schutzprofil (SP) aufgewickelt ist, das einen Mittelteil (MT) und seitlich angeordnete, flexible und spreizbare Ränder (R) aufweist, die geeignet sind, sich beim Einlegevorgang abzubiegen und gegen Wandungen der Verlegenut (VN) zu spreizen, wobei die beiden aufgefalteten Ränder (R) an den Enden schräg nach auswärts gestellt sind, **dadurch gekennzeichnet, dass**
die Ränder des auf der Ablauftrommel (AT) aufgewickelten Schutzprofils (SP) im aufgetrommelten Zustand jeweils flach abstehend geformt sind, und beim Einlegen U-förmig auffaltbar sind, wobei das Mittelteil eine größere Dicke als die spreizbaren flexiblen Ränder aufweist und die spreizbaren flexiblen Ränder mit ihren Kanten am Mittelteil befestigt sind, und
Führungsrollen (FR) vorgesehen sind zum Positionieren des in die Verlegenut (VN) einzulegenden Schutzprofils (SP), wobei die Führungsrollen (FR) vor der Eindrückrolle (ER) angeordnet sind.

2. Einlegevorrichtung nach Anspruch 1,
**dadurch gekennzeichnet,**
**daß** eine Vorführung (VF) vor den Führungsrollen (FR) angeordnet ist.

3. Einlegevorrichtung nach einem der vorhergehenden Ansprüche,
**dadurch gekennzeichnet,**
**daß** die Ablauftrommel (AT) mit einer Bremse (TB) versehen ist.

4. Einlegevorrichtung nach einem der vorhergehenden Ansprüche,
**dadurch gekennzeichnet,**
**daß** die Ränder (R8) des auf der Ablauftrommel aufgewickelten Schutzprofils (SP8) durchgehend ohne Abstufung in einer Ebene verlaufen.

5. Einlegevorrichtung nach einem der Ansprüche 1 bis 3,
**dadurch gekennzeichnet,**
**daß** die Ränder (R) des auf der Ablauftrommel aufgewickelten Schutzprofils (SP2) mit querverlaufenden Schlitzen versehen sind.

6. Einlegevorrichtung nach einem der vorhergehenden Ansprüche,
**dadurch gekennzeichnet,**
**daß** das auf der Ablauftrommel aufgewickelte Schutzprofil (SP3, SP4, SP5, SP6, SP7, SP9) im jeweiligen Mittelteil längsverlaufende Elemente (LE) aufweist, insbesondere elektrische Drähte oder Lichtwellenleiter.

7. Einlegevorrichtung nach einem der vorhergehenden Ansprüche,
**dadurch gekennzeichnet,**
**daß** das auf der Ablauftrommel aufgewickelte Schutzprofil (SP4, SP5) mit einem Lichtwellenleitermaxibündel (MB) oder einem Lichtwellenleiter-Bändchen (LWLB) versehen ist.

8. Einlegevorrichtung nach einem der Ansprüche 1 bis 6,
**dadurch gekennzeichnet,**
**daß** das auf der Ablauftrommel aufgewickelte Schutzprofil (SP6) ein am Mittelteil (MT) befestigtes Mikrokabel (MK) umfassend ein Rohr und darin eingebrachte Lichtwellenleiter aufweist.

9. Einlegevorrichtung nach einem der vorhergehenden Ansprüche,
**dadurch gekennzeichnet,**
**daß** das auf der Ablauftrommel aufgewickelte Schutzprofil (SP7) aus mehreren Schichten besteht.

10. Einlegevorrichtung nach Anspruch 9,
**dadurch gekennzeichnet,**
**daß** eine Schicht oder mehrere Schichten Lichtwellenleiter enthalten.

11. Einlegevorrichtung nach Anspruch 9 oder 10,
**dadurch gekennzeichnet,**
**daß** eine Schicht (S1) als Dämpfungsschicht ausgebildet ist und vorzugsweise aus geschäumtem Kunststoffmaterial besteht.

12. Einlegevorrichtung nach einem der Ansprüche 9 bis 11,
**dadurch gekennzeichnet,**
**daß** mindestens eine Schicht quer- und längswasserdicht ist.

13. Einlegevorrichtung nach einem der vorhergehenden Ansprüche,
**dadurch gekennzeichnet,**
**daß** das auf der Ablauftrommel aufgewickelte Schutzprofil (SP3) im Mittelteil (MT) eine Stärke (SMT) von 1,5 bis 3 mm aufweist, daß die Ränder (R) eine Stärke (SR) von 0,5 bis 1 mm aufweisen, daß die flexiblen Ränder (R) eine Länge (LR) von 5 bis 10 mm aufweisen.

14. Einlegevorrichtung nach einem der vorhergehenden Ansprüche,
**dadurch gekennzeichnet,**
**daß** das auf der Ablauftrommel aufgewickelte Schutzprofil (SP3) für eine Verlegenut von 10 mm Breite ein Mittelteil (MT) mit einer Breite (BMT) von 8 bis
9 mm aufweist und daß der weite Abstand der Ränder (R) eine Abstandsbreite (AR) von 15 mm aufweist.

15. Einlegevorrichtung nach einem der vorhergehenden Ansprüche,
**dadurch gekennzeichnet,**
**daß** das auf der Ablauftrommel aufgewickelte Schutzprofil aus glasfaserverstärktem Poyester besteht.

16. Einlegevorrichtung nach einem der Ansprüche 1 bis 14,
**dadurch gekennzeichnet,**
**daß** das auf der Ablauftrommel aufgewickelte Schutzprofil aus Polvinylchlorid (PVC) besteht.

17. Einlegevorrichtung nach einem der Ansprüche 1 bis 14,
**dadurch gekennzeichnet,**
**daß** das auf der Ablauftrommel aufgewickelte Schutzprofil aus High-Density-Polyethylen (HDPE) besteht.

18. Einlegevorrichtung nach einem der vorhergehenden Ansprüche,
**dadurch gekennzeichnet,**
**daß** eine Vorrichtung zum Einbringen eines Quellmittels in Form von Quellfäden, eines Quellvlieses oder einer Quellfüllmasse vor dem Einlegen des Schutzprofils in der Verlegenut (VN) angeordnet ist.

19. Einlegevorrichtung nach einem der Ansprüche 1 bis 17,
**dadurch gekennzeichnet,**
**daß** eine Vorrichtung zum Einbringen einer flexiblen Füllmasse vor dem Einlegen des Schutzprofils in der Verlegenut (VN) angeordnet ist.

20. Einlegevorrichtung nach einem der vorhergehenden Ansprüche,
**dadurch gekennzeichnet,**
**daß** eine Ablauftrommel mit einem Mikrokabel (MK) angeordnet ist, das aus einem Rohr und darin eingebrachten Lichtwellenleitern besteht.

21. Einlegevorrichtung nach einem der vorhergehenden Ansprüche,
**dadurch gekennzeichnet,**
**daß** die Einlegevorrichtung selbstfahrbar ausgerüstet ist.

22. Einlegevorrichtung nach einem der vorhergehenden Ansprüche,
**dadurch gekennzeichnet,**
**daß** die Einlegevorrichtung auf einem Kabelverlegewagen integriert ist.

23. Langgestrecktes Schutzprofil zum Einlegen oberhalb eines in einer Verlegenut verlegten Kabels, wobei das Schutzprofil auf einer Ablauftrommel einer Einlegevorrichtung zum Einlegen in die Verlegenut aufwickelbar ist,
- mit einem Mittelteil (MT) und seitlich angeordneten, flexiblen und spreizbaren Rändern (R), die geeignet sind, sich beim Einlegevorgang abzubiegen und gegen Wandungen der Verlegenut (VN) zu spreizen, **dadurch gekennzeichnet dass** das Mittelteil eine größere Dicke als die spreizbaren flexiblen Rändern aufweist, und die spreizbaren flexiblen Ränder mit ihren Kanten am Mittelteil befestigt sind, so dass die Ränder des auf der Ablauftrommel (AT) aufgewickelten Schutzprofils im aufgetrommelten Zustand jeweils flach vom Mittelteil (MT) abstehend geformt sind.

## Claims

1. Inserting device to insert an elongated protective profile above a cable laid in a laying groove,
- having a pay-off reel (AT) which is arranged on the inserting device (EV), which is adopted to be movable,
- having a pressing-in roll (ER) engaging in the laying groove (VN),
- an elongated protective profile (SP) being taken up on the pay-off reel (AT) which comprises a middle part (MT) and laterally arranged, flexible and spreadable edges (R) which are suitable for being bent away and spread against walls of the laying groove (VN) during the inserting operation, wherein two folded-open edges (R) being placed obliquely outwards at the ends,
**characterized in that**
- the edges of the protective profile (SP) taken up on the pay-off reel (AT) are formed projecting in a flat fashion in each case in the drummed state and can be folded open in a U-shaped fashion upon insertion, the middle part having a greater thickness than the spreadable, flexible edges, and the spreadable, flexible edges being fastened with their rims on the middle part, and
- guide rolls (FR) are provided for positioning the protective profile (SP) to be inserted into the laying groove (VN), the guide rolls (FR) being arranged upstream of the pressing-in roll.

2. Inserting device according to Claim 1, **characterized in that** a preliminary guide (VF) is arranged upstream of the guide rolls (FR).

3. Inserting device according to one of the preceding claims, **characterized in that** the pay-off reel (AT) is provided with a brake (TB).

4. Inserting device according to one of the preceding claims, **characterized in that** the edges (R8) of the protective profile (SP8) taken up on the pay-off reel run continuously in a plane without stepping.

5. Inserting device according to one of Claims 1 to 3, **characterized in that** the edges (R) of the protective profile (SP2) taken up on the pay-off reel are provided with transversely running slots.

6. Inserting device according to one of the preceding claims, **characterized in that** the protective profile (SP3, SP4, SP5, SP6, SP7, SP9) taken up on the pay-off reel has longitudinally running elements (LE), in particular electric wires or optical fibres, in the respective middle part.

7. Inserting device according to one of the preceding claims, **characterized in that** the protective profile (SP4, SP5) taken up on the pay-off reel is provided with an optical fibre maxi-unit (MB) or with an optical fibre ribbon (LWLB).

8. Inserting device according to one of Claims 1 to 6, **characterized in that** the protective profile (SP6) taken up on the pay-off reel has a micro-cable (MK) fixed on the middle part (MT) comprising a tube and optical fibres inserted therein.

9. Inserting device according to one of the preceding claims, **characterized in that** the protective profile (SP7) taken up on the pay-off reel comprises a plurality of layers.

10. Inserting device according to Claim 9, **characterized in that** one layer or a number of layers contain optical fibres.

11. Inserting device according to Claim 9 or 10, **characterized in that** one layer (S1) is constructed as a damping layer and preferably comprises foamed plastic material.

12. Inserting device according to one of Claims 9 to 11, **characterized in that** at least one layer is completely watertight.

13. Inserting device according to one of the preceding claims, **characterized in that** in the middle part (MT) the protective profile (SP3) taken up on the pay-off reel comprises a thickness (SMT) of 1.5 to 3 mm, **in that** the edges (R) have a thickness (SR) of 0.5 to 1 mm, and **in that** the flexible edges (R) have a length (LR) of 5 to 10 mm.

14. Inserting device according to one of the preceding claims, **characterized in that** for a laying groove of width 10 mm the protective profile (SP3) taken up on the pay-off reel comprises a middle part (MT) with a width (BMT) of 8 to 9 mm, and **in that** the wide spacing of the edges (R) comprises a spacing width (AR) of 15 mm.

15. Inserting device according to one of the preceding claims, **characterized in that** the protective profile taken up on the pay-off reel consists of glass-fibre reinforced polyester.

16. Inserting device according to one of Claims 1 to 14, **characterized in that** the protective profile taken up on the pay-off reel consists of polyvinylchloride (PVC).

17. Inserting device according to one of Claims 1 to 14, **characterized in that** the protective profile taken up on the pay-off reel consists of high-density polyethylene (HDPE).

18. Inserting device according to one of the preceding claims, **characterized in that** a device for introducing a swelling agent in the form of swelling threads, a swelling nonwoven or a swelling filling compound is arranged in the laying groove (VN) before the insertion of the protective profile.

19. Inserting device according to one of Claims 1 to 17, **characterized in that** a device for inserting a flexible filling compound is arranged in the laying groove (VN) before the insertion of the protective profile.

20. Inserting device according to one of the preceding claims, **characterized in that** a unwinding drum is arranged with a microcable (MK) which comprises a tube and optical fibres inserted therein.

21. Inserting device according to one of the preceding claims, **characterized in that** the inserting device is equipped to be self-propelled.

22. Inserting device according to one of the preceding claims, **characterized in that** the inserting device is integrated on a cable laying carriage.

23. Elongated protective profile for being inserted above a cable laid in a laying groove, it being possible to take up the protective profile on a pay-off reel of an inserting device for insertion into the laying groove,
- having a middle part (MT) and laterally arranged, flexible and spreadable edges (R) which are suitable for being bent away and spread against walls of the laying groove (VN) during the inserting operation,
**characterized in that** the middle part has a greater thickness than the spreadable, flexible edges, and the spreadable, flexible edges are fastened with their rims on the middle part such that the edges of the protective profile taken up on the pay-off reel (AT) are formed projecting in a flat fashion from the middle part (MT) in the drummed state.

## Revendications

1. Dispositif d'insertion pour insérer un profilé de protection s'étendant en longueur au-dessus d'un câble posé dans une rainure de pose, comportant un tambour de dévidage (AT) placé sur le dispositif d'insertion (EV) conçu pour être mobile ainsi qu'un galet de poussée (ER) qui pénètre dans la rainure de pose (VN),
dans lequel est enroulé sur le tambour de dévidage (AT) un profilé de protection (SP) s'étendant en longueur, muni d'une partie centrale (MT) et de bords (R) flexibles et écartables placés de côté, qui sont aptes à se courber lors de l'opération d'insertion et à s'écarter contre des parois de la rainure de pose (VN), les deux bords (R) dépliés étant posés de biais vers l'extérieur aux extrémités,
**caractérisé en ce que** chacun des bords du profilé de protection (SP) enroulé sur le tambour de dévidage (AT) est conçu pour dépasser à plat à l'état placé sur le tambour et peut se déplier en U lors de l'insertion, la partie centrale étant plus épaisse que les bords écartables et flexibles et les bords écartables et flexibles étant fixés par leurs arêtes à la partie centrale, et des galets de guidage (FR) sont en outre prévus pour mettre en place le profilé de protection (SP) inséré dans la rainure de pose (VN), les galets de guidage (FR) étant alors placés devant le galet de poussée (ER).

2. Dispositif d'insertion selon la revendication 1, **caractérisé en ce qu'**un guide avant (VF) est placé devant les galets de guidage (FR).

3. Dispositif d'insertion selon l'une des revendications précédentes, **caractérisé en ce que** le tambour de dévidage (AT) est muni d'un frein (TB).

4. Dispositif d'insertion selon l'une des revendications précédentes, **caractérisé en ce que** les bords (R 8) du profilé de protection (SP 8) enroulé sur le tambour de dévidage s'étendent en continu sans dénivellation dans un plan.

5. Dispositif d'insertion selon l'une des revendications 1 à 3, **caractérisé en ce que** les bords (R) du profilé de protection (SP 2) enroulé sur le tambour de dévidage sont munis de fentes qui s'étendent transversalement.

6. Dispositif d'insertion selon l'une des revendications précédentes, **caractérisé en ce que** le profilé de protection (SP 3, SP 4, SP 5, SP 6, SP 7, SP 9) enroulé sur le tambour de dévidage comporte dans sa partie centrale respective des éléments longitudinaux (LE), en particulier des fils électriques ou des guides d'ondes optiques.

7. Dispositif d'insertion selon l'une des revendications précédentes, **caractérisé en ce que** le profilé de protection (SP 4, SP 5) enroulé sur le tambour de dévidage est muni d'un grand faisceau de guides d'ondes optiques (MB) ou d'une petite bande de guides d'ondes optiques (LWLB).

8. Dispositif d'insertion selon l'une des revendications 1 à 6, **caractérisé en ce que** le profilé de protection (SP 6) enroulé sur le tambour de dévidage comporte un microcâble (MK) qui est fixé à la partie centrale (MT) et qui comporte un tube et des guides d'ondes optiques introduits dans celui-ci.

9. Dispositif d'insertion selon l'une des revendications précédentes, **caractérisé en ce que** le profilé de protection (SP 7) enroulé sur le tambour de dévidage est constitué de plusieurs couches.

10. Dispositif d'insertion selon la revendication 9, **caractérisé en ce qu'**une ou plusieurs couches contiennent des guides d'ondes optiques.

11. Dispositif d'insertion selon la revendication 9 ou 10, **caractérisé en ce qu'**une couche (S 1) est une couche d'amortissement et est de préférence en une matière plastique alvéolaire.

12. Dispositif d'insertion selon l'une des revendications 9 à 11, **caractérisé en ce qu'**au moins une couche est transversalement et longitudinalement étanche à l'eau.

13. Dispositif d'insertion selon l'une des revendications précédentes, **caractérisé en ce que** dans la partie centrale (MT) le profilé de protection (SP 3) enroulé sur le tambour de dévidage a une épaisseur (SMT) de 1,5 à 3 mm, que les bords (R) ont une épaisseur (SR) de 0,5 à 1 mm et que les bords (R) flexibles ont une longueur (LR) de 5 à 10 mm.

14. Dispositif d'insertion selon l'une des revendications précédentes, **caractérisé en ce que** le profilé de protection (SP 3) enroulé sur le tambour de dévidage comporte, pour une rainure de pose d'une largeur de 10 mm, une partie centrale (MT) d'une largeur (BMT) de 8 à 9 mm et que l'écartement intérieur des bords (R) a une largeur d'écartement (AR) de 15 mm.

15. Dispositif d'insertion selon l'une des revendications précédentes, **caractérisé en ce que** le profilé de protection enroulé sur le tambour de dévidage est en polyester renforcé de fibres de verre.

16. Dispositif d'insertion selon l'une des revendications 1 à 14, **caractérisé en ce que** le profilé de protection enroulé sur le tambour de dévidage est en poly(chlorure de vinyle) (PVC) .

17. Dispositif d'insertion selon l'une des revendications 1 à 14, **caractérisé en ce que** le profilé de protection enroulé sur le tambour de dévidage est en polyéthylène à haute densité (HDPE).

18. Dispositif d'insertion selon l'une des revendications précédentes, **caractérisé en ce qu'**une installation destinée à introduire un agent gonflant sous forme de fils gonflants, un non-tissé gonflant ou une masse gonflante de remplissage est placée dans la rainure de pose (VN) avant d'insérer le profilé de protection.

19. Dispositif d'insertion selon l'une des revendications 1 à 17, **caractérisé en ce qu'**une installation destinée à introduire une masse flexible de remplissage est placée dans la rainure de pose (VN) avant d'insérer le profilé de protection.

20. Dispositif d'insertion selon l'une des revendications précédentes, **caractérisé en ce qu'**un tambour de dévidage est équipé d'un microcâble (MK) qui consiste en un tube et en guides d'ondes optiques à l'intérieur de celui-ci.

21. Dispositif d'insertion selon l'une des revendications précédentes, **caractérisé en ce que** le dispositif d'insertion est équipé pour se déplacer par soi-même.

22. Dispositif d'insertion selon l'une des revendications précédentes, **caractérisé en ce que** le dispositif d'insertion est intégré sur un chariot à poser des câbles.

23. Profilé de protection s'étendant en longueur à insérer au-dessus d'un câble posé dans une rainure de pose, le profilé de protection pouvant, pour être posé dans la rainure de pose, être enroulé sur un tambour de dévidage d'un dispositif d'insertion comportant une partie centrale (MT) et des bords (R) flexibles et écartables placés de côté qui sont aptes à se courber lors de l'opération d'insertion et à s'écarter contre des parois de la rainure de pose (VN),
**caractérisé en ce que** la partie centrale est plus épaisse que les bords écartables et flexibles et les bords écartables et flexibles sont fixés par leurs arêtes à la partie centrale, de sorte que les bords du profilé de protection enroulé sur le tambour de dévidage (AT) sont conçus pour dépasser à plat de la partie centrale (MT) à l'état placé sur le tambour.
